# FASCICULE DE BREVET EUROPEEN

(11) **EP 2 079 956 B1**
(45) Date de publication et mention de la délivrance du brevet: **11.05.2011**
(21) Numéro de dépôt: 07866400.0
(22) Date de dépôt: 17.10.2007
(51) Int. Cl.: F16L 27/08

(54) **DISPOSITIF DE RACCORDEMENT ROTATIF**
DREHVERBINDUNGSVORRICHTUNG
ROTARY CONNECTION DEVICE

(30) Priorité: 19.10.2006 FR 0609172
(43) Date de publication de la demande: 22.07.2009
(73) Titulaire: Legris SAS, 35000 Rennes (FR)
(72) Inventeur: CAMBOT COURRAU, Yves, 35235 Thorigne Fouillard (FR); GUILLARD, Philippe, 35830 Betton (FR); LE QUERE, Philippe, 35830 Betton (FR)
(74) Mandataire: Lavialle, Bruno François Stéphane
(86) Numéro de dépôt international: PCT/FR2007/001712
(87) Numéro de publication internationale: WO 2008/047002

(56) Documents cités:
- EP-A1- 0 098 774
- EP-A1- 0 330 631
- US-A- 3 278 204

## Description

La présente invention concerne un dispositif de raccordement d'un premier conduit à un deuxième conduit, utilisable dans des circuits de transport de fluides tels que des circuits hydrauliques ou pneumatiques, pour raccorder entre eux des organes de ce circuit comme des organes émetteurs et récepteurs de fluides et, par exemple, des canalisations, des distributeurs, des actionneurs, des pompes, des filtres ...

### ARRIERE PLAN DE L'INVENTION

Il existe des dispositifs de raccordement comprenant un premier et un deuxième éléments tubulaires qui ont chacun un tronçon de raccordement respectivement au premier conduit et au deuxième conduit et qui sont reliés l'un à l'autre par des tronçons de liaison montés l'un sur l'autre libres en rotation. Le tronçon de raccordement du premier élément comprend par exemple des moyens de connexion instantanée ou verrouillable au premier conduit. Le tronçon de raccordement du deuxième élément est par exemple pourvu d'un filetage pour être engagé dans une extrémité taraudée du deuxième conduit. Les deux tronçons de liaison sont généralement mâle et femelle et radialement déformables de manière élastique pour pouvoir coopérer l'un avec l'autre par un engagement élastique ou encliquetage. La liberté en rotation des tronçons de liaison permet ainsi d'orienter le premier conduit par rapport au deuxième conduit à la fin du vissage du deuxième élément dans le deuxième conduit. Une telle liberté en rotation est également intéressante lorsque les deux conduits sont en mouvement l'un par rapport à l'autre. La liberté en rotation limite alors les sollicitations mécaniques exercées sur les tronçons de liaison des premier et deuxième éléments du dispositif de raccordement, limitant le risque de survenue de contraintes de fatigue pouvant conduire à une rupture.

L'encliquetage des tronçons de liaison offre l'avantage de permettre un montage rapide et simple des deux éléments l'un sur l'autre. Il présente toutefois l'inconvénient, du fait de la déformabilité des tronçons de liaison, de céder pour des efforts relativement peu importants.

Le document EP0330631A1 décrit un dispositif de raccordement selon le préambule de la revendication 1.

### OBJET DE L'INVENTION

Il serait donc intéressant de disposer d'un dispositif de raccordement résistant tout en ayant des éléments encliquetés.

### RESUME DE L'INVENTION

A cet effet, on prévoit, selon l'invention, un dispositif de raccordement d'un premier conduit à un deuxième conduit, comprenant un premier et un deuxième éléments tubulaires qui ont chacun un tronçon de raccordement respectivement au premier conduit et au deuxième conduit et qui sont reliés l'un à l'autre par des tronçons de liaison montés libres en rotation l'un par rapport à l'autre, le tronçon de liaison du premier élément comprenant une partie mâle tubulaire qui est radialement déformable de manière élastique et qui est emmanchée à force dans une partie femelle relativement rigide du tronçon de liaison du deuxième élément, et le dispositif de raccordement comprenant un troisième élément qui délimite un passage de fluide et qui est reçu dans la partie mâle pour s'opposer à une déformation radiale de celle-ci.

Ainsi, seule la partie mâle se déforme pour permettre l'encliquetage du premier élément sur le deuxième élément et le troisième élément vient soutenir la partie mâle après l'encliquetage de manière à empêcher un déboîtement du premier élément et du deuxième élément.

Selon un premier mode de réalisation, le troisième élément est un anneau fendu reçu dans une gorge interne de la partie mâle, ou, en variante, le troisième élément est une douille fendue.

Ce mode de réalisation est particulièrement simple.

Selon un deuxième mode de réalisation, le troisième élément est une fourrure tubulaire et, de préférence, la fourrure a une portion d'extrémité solidaire du deuxième élément et une portion d'extrémité reçue à pivotement dans la partie mâle.

La fourrure rigidifie ainsi non seulement le tronçon de liaison du premier élément, mais également le deuxième élément. On améliore de la sorte la rigidité axiale de l'ensemble formé par le premier élément et le deuxième élément.

Avantageusement, selon une caractéristique particulière, le tronçon de raccordement du deuxième élément est extérieurement fileté pour être engagé dans une extrémité taraudée du deuxième conduit.

Le dispositif de raccordement une fois assemblé se présente sous la forme d'un ensemble unitaire qu'il suffit de visser dans le deuxième conduit pour le rendre opérationnel et prêt à recevoir le premier conduit.

Selon une autre caractéristique particulière, le troisième élément comprend une section de rigidification engagée dans la partie mâle, une section intermédiaire s'étendant dans le tronçon de raccordement du deuxième élément et une section d'ancrage en saillie dudit tronçon de raccordement pour être ancrée dans le deuxième conduit et, de préférence, la section d'implantation du troisième élément est filetée pour être engagée dans une extrémité taraudée du deuxième conduit et la section intermédiaire a une surface externe à contour non circulaire.

Le raccordement du tronçon de raccordement du deuxième élément au deuxième conduit est alors assuré par l'intermédiaire du troisième élément.

Alors, selon un troisième mode de réalisation, la section intermédiaire et le tronçon de raccordement du deuxième élément ont des reliefs complémentaires assurant leur retenue élastique.

L'encliquetage du deuxième élément sur la section intermédiaire du troisième élément permet un montage simple et rapide de ces deux éléments.

Selon un quatrième mode de réalisation, la section intermédiaire est soudée dans le tronçon de raccordement du deuxième élément.

La soudure assure une liaison résistante du troisième élément au deuxième élément.

Selon un cinquième mode de réalisation, la section de rigidification et le premier élément comportent des reliefs complémentaires assurant leur retenue mutuelle élastique et dans lequel le troisième élément et le premier élément comportent des épaulements pour retenir entre eux le deuxième élément.

Le deuxième élément est alors prisonnier entre le premier élément et le troisième élément encliquetés l'un sur l'autre.

D'autres caractéristiques et avantages de l'invention ressortiront à la lecture de la description qui suit de modes de réalisation particuliers non limitatifs de l'invention.

### BREVE DESCRIPTION DES DESSINS

Il sera fait référence aux dessins annexés, parmi lesquels :
- la figure 1 est une vue en perspective avec écorché d'un dispositif de raccordement conforme à un premier mode de réalisation de l'invention,
- la figure 2 est une vue partielle en coupe selon le plan II-II de la figure 1 de ce dispositif de raccordement,
- la figure 3 est une vue analogue à celle de la figure 2, d'un dispositif de raccordement selon une variante du premier mode de réalisation,
- la figure 4 est une vue analogue à celle de la figure 2, d'un dispositif de raccordement conforme à un deuxième mode de réalisation,
- la figure 5 et la figure 6 sont des vues analogues à la figure 2 d'un dispositif de raccordement respectivement selon un troisième mode de réalisation et une variante de ce mode de réalisation,
- la figure 7 et la figure 8 sont des vues analogues à celle de la figure 2 d'un dispositif de raccordement conforme à un quatrième et un cinquième modes de réalisation respectivement.

### DESCRIPTION DETAILLEE DE L'INVENTION

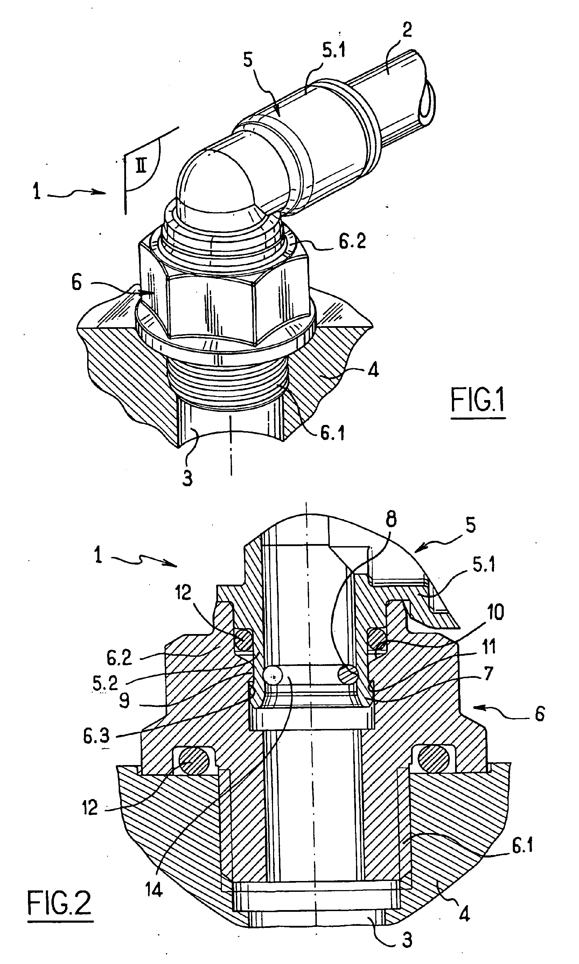

En référence aux figures 1 et 2, le dispositif de raccordement conforme au premier mode de réalisation, généralement désigné en 1, est agencé pour permettre le raccordement d'un premier conduit, ici une canalisation 2, à un deuxième conduit, ici un canal 3 d'un organe 4 émetteur ou récepteur de fluide. Le canal 3 a une extrémité taraudée. Cette extrémité pourrait cependant être lisse et/ou comporter une gorge.

Le dispositif de raccordement 1 comprend un premier élément 5 et une deuxième élément 6.

Le premier élément 5 et le deuxième élément 6 sont tubulaires.

Le premier élément 5 comprend un tronçon de raccordement 5.1 à la canalisation 2 et un tronçon de liaison 5.2 au deuxième élément 6.

Le tronçon de raccordement 5.1 comprend des éléments connus en eux-mêmes permettant d'y assujettir de façon étanche une extrémité de la canalisation 2. Ces moyens sont des moyens de connexion instantanée ou verrouillable connus en eux-mêmes, comportant par exemple une rondelle d'accrochage dentée et déformable ou un verrou mobile radialement. D'autres moyens d'assujettissement étanche sont également envisageables.

Le tronçon de liaison 5.2 s'étend perpendiculairement au tronçon de raccordement 5.1 et comporte une extrémité libre pourvue extérieurement d'un bourrelet 7 ayant une face frontale tronconique. Le tronçon de liaison 5.2 forme ainsi une partie mâle. Une gorge 8 est ménagée à l'intérieur de la partie mâle 5.2 en retrait par rapport au bourrelet 7. La partie mâle 5.2 est radialement déformable de façon élastique.

Le deuxième élément 6 comprend un tronçon de raccordement 6.1 au canal 3 et un tronçon de liaison 6.2 au premier élément 5.

Le tronçon de raccordement 6.1 est extérieurement fileté pour pouvoir coopérer par vissage avec l'extrémité taraudée du canal 3. Le tronçon de liaison 6.2 comprend un logement 6.3 agencé pour former une partie femelle destinée à accueillir la partie mâle 5.2 du premier élément 5. L'entrée de la partie femelle 6.3 est pourvue intérieurement d'un redan annulaire 9 en saillie interne présentant une face avant 10 de forme tronconique et une face arrière radiale formant un épaulement 11. Le redan annulaire 9 délimite un passage de diamètre inférieur au diamètre externe du bourrelet 7. La partie femelle de la section de liaison 6.2 du deuxième élément 6 est relativement rigide par rapport à la partie mâle 5.2 du premier élément 5. Le tronçon de liaison 6.2 a ici une forme externe à section hexagonale pour faciliter le vissage du tronçon de raccordement 6.1 dans le canal 3.

Le deuxième élément 6 est en outre équipé d'éléments annulaires d'étanchéité 12, 13 pour assurer une étanchéité d'une part entre le deuxième élément 6 et l'organe de circuit 4 et, d'autre part, entre le deuxième élément 6 et le premier élément 5.

Un troisième élément 14, ici un anneau fendu, est reçu dans la gorge 8 pour former un organe de rigidification s'opposant à une déformation radiale de la partie mâle du premier élément.

La partie mâle 5.2 du premier élément 5 est engagée élastiquement, ou encliquetée, dans la partie femelle 6.3 de la section de liaison 6.2 du deuxième élément 6. Lors de l'encliquetage, la face frontale du bourrelet 7 de la partie mâle et la face avant 10 du redan annulaire 9 de la partie femelle viennent en contact et glissent l'une sur l'autre, provoquant une déformation radiale de la partie mâle permettant au bourrelet 7 de passer dans le passage délimité par le redan annulaire 9. Une fois le bourrelet 9 passé, la partie mâle revient élastiquement dans son état de repos et l'épaulement 11 du redan annulaire 9 s'oppose à l'extraction de la partie mâle hors de la partie femelle.

Comme la partie femelle de la section de liaison 6.2 du deuxième élément 6 est relativement rigide par rapport à la partie mâle 5.2 du premier élément 5, seule la partie mâle 5.2 se déforme lors de l'encliquetage ou lors d'une extraction du premier élément 5 hors du deuxième élément 6.

Le premier élément 5 et le deuxième élément 6 possèdent des épaulements qui, lorsqu'ils sont en contact, forment une butée à l'enfoncement de la partie mâle dans la partie femelle. Lorsque ces épaulements sont en butée, la gorge 8 s'étend en regard du redan annulaire 9.

Le troisième élément 14 est mis en place dans la gorge 8 après encliquetage du premier élément 5 dans le deuxième élément 6 et avant vissage du deuxième élément 6 dans l'extrémité taraudée du canal 3. Le troisième élément 14 n'est reçu que dans le premier élément et n'assure pas un blocage en rotation du premier élément 5 sur le deuxième élément 6. Le troisième élément laisse donc libre la rotation du premier élément 5 par rapport au deuxième élément.

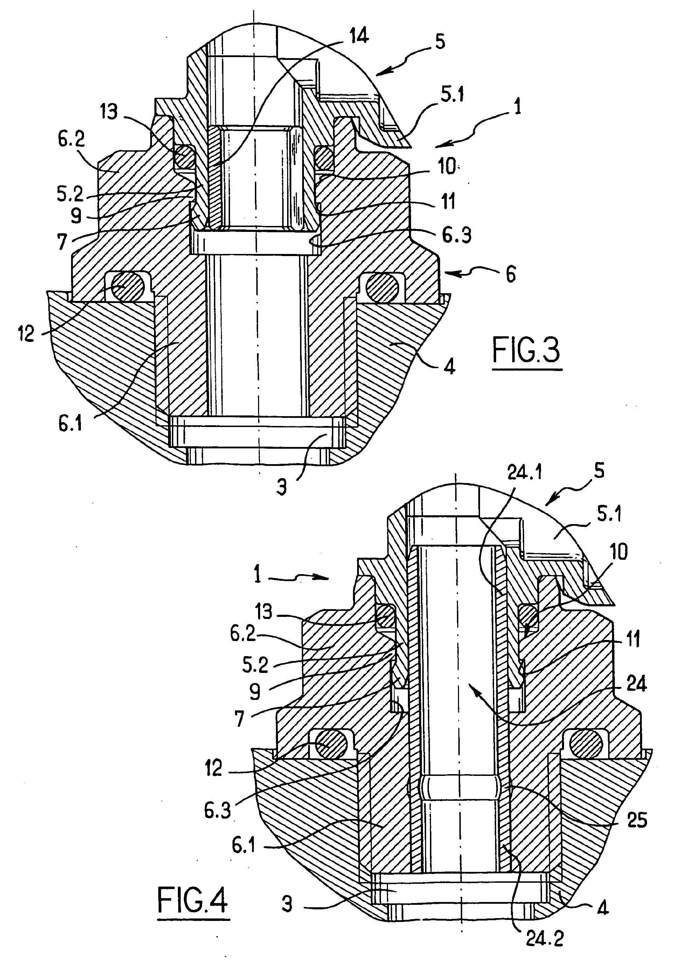

En variante, conformément à la figure 3, le troisième élément 14 est une douille fendue emmanchée à force dans la partie mâle du tronçon de liaison 5.2 du premier élément 5. La partie mâle 5.2 ne comporte pas ici de gorge pour recevoir la douille fendue. Il est cependant possible d'en prévoir une.

Le dispositif de raccordement du deuxième mode de réalisation, représenté à la figure 4, diffère du dispositif de raccordement conforme au premier mode de réalisation en ce que le troisième élément, référencé en 24, est une fourrure comportant une portion d'extrémité 24.1 reçue en libre en rotation dans la partie mâle 5.2 du premier élément 5 pour former un organe de rigidification s'opposant à une déformation radiale de celle-ci et une deuxième extrémité 24.2 qui s'étend en saillie de la partie mâle du premier élément 5 dans le deuxième élément 6 et qui est solidaire du tronçon de raccordement 6.1 du deuxième élément 6. La solidarisation du troisième élément 24 avec le deuxième élément 6 est ici obtenue par un emmanchement à force. L'extrémité 24.2 est à cet effet pourvue d'un renflement 25 externe pour augmenter localement le frottement du troisième élément 24 sur le deuxième élément 6. La portion d'extrémité 24.1, reçue libre en rotation dans le premier élément 5, permet au premier élément 5 de librement pivoter par rapport au deuxième élément.

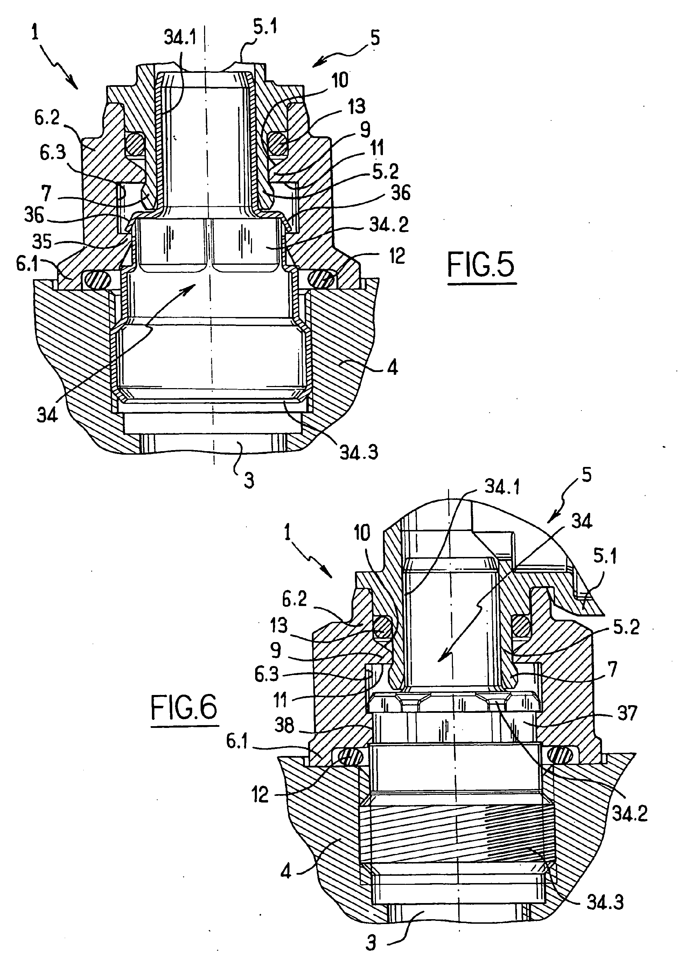

Les troisième, quatrième et cinquième modes de réalisation vont maintenant être décrits en relation avec les figures 5 à 8.

Dans ces modes de réalisation, le deuxième élément 6 a son tronçon de raccordement 6.1 simplement en appui étanche contre une face de l'organe 4.

Le troisième élément 34 comprend une section de rigidification 34.1 reçue libre en rotation dans la partie mâle 5.2 du premier élément 5, une section intermédiaire 34.2 et une section d'ancrage 34.3 qui est ici filetée extérieurement pour être engagée dans l'extrémité taraudée du canal 3 de l'organe 4. Le troisième élément 34 ne gêne pas la rotation du premier élément par rapport au deuxième élément.

Dans le troisième mode de réalisation représenté à la figure 5, le tronçon de raccordement 6.1 du deuxième élément 6 est pourvu intérieurement d'un redan annulaire 35 et la section intermédiaire 34.2 du troisième élément 34 comprend des pattes 36 en saillie externe, réalisées par découpage de la paroi formant le troisième élément 34, pour venir s'accrocher derrière le redan annulaire 35 du tronçon de raccordement 6.1 du deuxième élément 6 lorsque le troisième élément 34 est en position dans le deuxième élément 6 et le premier élément 5. La face annulaire du redan annulaire 35 en contact avec els pattes 36 est un épaulement radial asservant un assemblage indémontable du troisième élément dans le deuxième élément. Le redan annulaire 35 du deuxième élément 6 a un contour transversal de forme complémentaire à celui de la section intermédiaire pour lier ceux-ci en rotation.

Le troisième élément 34 est ici en métal.

Le montage du dispositif de raccordement conforme au troisième mode de réalisation est effectué comme suit. La partie mâle 5.2 du premier élément 5 est encliquetée dans la partie femelle 6.2 du deuxième élément 6 puis le troisième élément 34 est encliqueté dans le deuxième élément 6. En variante, le troisième élément 34 est ensuite vissé dans l'extrémité taraudée du canal 3.

En variante, le troisième élément 34 peut être vissé à l'organe 4 avant son encliquetage dans le deuxième élément 6 encliqueté sur le premier élément 5. On notera que, de préférence, la section intermédiaire 34.2 a une surface externe de contour non circulaire, par exemple une surface polygonale, de manière à permettre l'utilisation d'un outil pour visser le troisième élément 34 dans l'extrémité taraudée du canal 3.

En variante encore, comme représenté sur la figure 6, la section intermédiaire 34.2 du troisième élément 34 peut comporter des renfoncements 37, obtenus par exemple par déformation plastique, pour recevoir des saillies 38 internes du tronçon de raccordement 6.1 du deuxième élément 6.

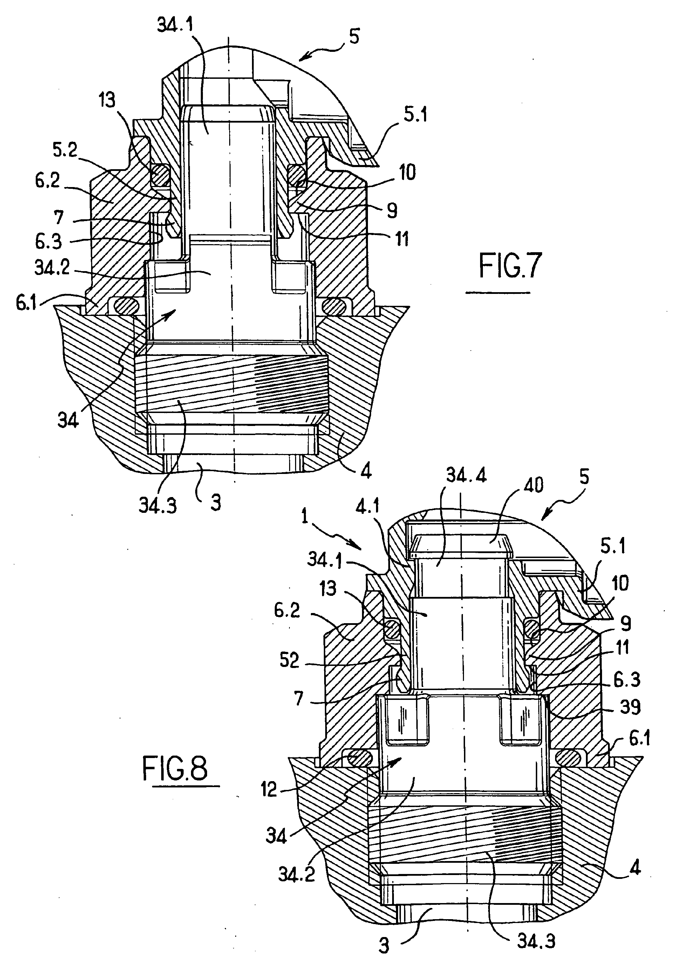

En référence à la figure 7, le dispositif de raccordement conforme au quatrième mode de réalisation diffère de celui du troisième mode de réalisation en ce que la section intermédiaire 34.2 du troisième élément 34 est soudée dans le tronçon de raccordement 6.2 du deuxième élément 6. Le soudage est ici réalisé par friction. Dans ce mode de réalisation, le premier élément 5 est monté sur le deuxième élément 6 puis le troisième élément 34 est soudé dans le deuxième élément 6. La section d'ancrage 34.3 du troisième élément 34 peut alors être vissée dans l'extrémité taraudée du canal 3.

En référence à la figure 8, dans le dispositif de raccordement conforme au cinquième mode de réalisation, la section intermédiaire 34.2 du troisième élément 34 est en butée contre un épaulement interne 39 du deuxième élément 6 et la section de rigidification 34.1 est prolongée par une section d'encliquetage 34.4 comportant un bourrelet terminal 40 dont le diamètre est supérieur à un diamètre d'un passage défini par un redan annulaire 41 interne du premier élément 5. Ainsi, le troisième élément 34 est encliqueté dans le premier élément 5 et le deuxième élément 6 est prisonnier entre le premier élément 5 et le troisième élément 34.

Dans ce mode de réalisation, le premier élément 5 est tout d'abord encliqueté sur le deuxième élément 6 et le troisième élément 34 est vissé dans l'extrémité taraudée du canal 3. L'ensemble formé par le premier élément 5 et le deuxième élément 6 est ensuite enfilé sur le troisième élément 34 jusqu'à ce que le bourrelet 40 de la section d'encliquetage 34.4 passe le redan annulaire 41.

En variante, le troisième élément 34 et le deuxième élément 6 peuvent être liés en rotation.

Bien entendu, l'invention n'est pas limitée au mode de réalisation décrit et on peut y apporter des variantes de réalisation sans sortir du cadre de l'invention tel que défini par les revendications.

En particulier, il est possible de réaliser un dispositif de raccordement en combinant les différents modes de réalisation décrits.

La section d'ancrage du troisième élément 34 peut être agencée pour être insérée à force ou être cramponnée dans une extrémité lisse du canal 3.

Le tronçon de raccordement 6.1 du deuxième élément 6 peut être agencé pour recevoir une extrémité de canalisation.

Le troisième élément peut avoir toute forme assurant une rigidification de la partie mâle 5.2.

## Revendications

1. Dispositif de raccordement d'un premier conduit à un deuxième conduit, comprenant un premier et un deuxième éléments (5, 6) tubulaires qui ont chacun un tronçon de raccordement (5.1, 6.1) respectivement au premier conduit et au deuxième conduit et qui sont reliés l'un à l'autre par des tronçons de liaison (5.2, 6.2) montés libres en rotation l'un par rapport à l'autre, le tronçon de liaison (5.2) du premier élément (5) comprenant une partie mâle tubulaire qui est radialement déformable de manière élastique et qui est emmanchée à force dans une partie femelle (6.3) relativement rigide du tronçon de liaison (5.2) du deuxième élément (6), **caractérisé en ce que** le dispositif de raccordement comprend un troisième élément (14 ; 24 ; 34) qui délimite un passage de fluide et qui est reçu dans la partie mâle pour s'opposer à une déformation radiale de celle-ci.

2. Dispositif selon la revendication 1, dans lequel le troisième élément est un anneau fendu (14) reçu dans une gorge (8) interne de la partie mâle (5.1).

3. Dispositif selon la revendication 1, dans lequel le troisième élément est une douille (14) fendue.

4. Dispositif selon la revendication 1, dans lequel le troisième élément est une fourrure tubulaire (24).

5. Dispositif selon la revendication 4, dans lequel la fourrure (24) a une portion d'extrémité (24.2) solidaire du deuxième élément (6) et une portion d'extrémité (24.1) reçue à pivotement dans la partie mâle (5.2).

6. Dispositif selon l'une quelconque des revendications des revendications 2 à 5, dans lequel le tronçon de raccordement (6.1) du deuxième élément (6) est extérieurement fileté pour être engagé dans une extrémité taraudée du deuxième conduit.

7. Dispositif selon la revendication 1, dans lequel le troisième élément (34) comprend une section de rigidification (34.1) engagée dans la partie mâle (5.2), une section intermédiaire (34.2) s'étendant dans le tronçon de raccordement (6.1) du deuxième élément (6) et une section d'ancrage (34.3) en saillie dudit tronçon de raccordement pour être ancrée dans le deuxième conduit.

8. Dispositif selon la revendication 7, dans lequel la section d'ancrage (34.3) du troisième élément (34) est filetée pour être engagée dans une extrémité taraudée du deuxième conduit et la section intermédiaire (34.2) a de préférence une surface externe à contour non circulaire.

9. Dispositif selon la revendication 7, dans lequel la section intermédiaire (34.2) et le tronçon de raccordement (6.1) du deuxième élément (6) ont des reliefs complémentaires (35, 36 ; 37, 38) assurant leur retenue élastique.

10. Dispositif selon la revendication 7, dans lequel la section intermédiaire (34.2) est soudée dans le tronçon de raccordement (6.1) du deuxième élément (6).

11. Dispositif selon la revendication 7, dans lequel la section de rigidification (34.3) et le premier élément (5) comportent des reliefs complémentaires (34.4, 40, 41) assurant leur retenue mutuelle élastique et dans lequel le troisième élément (34) et le premier élément (5) comportent des épaulements pour retenir entre eux le deuxième élément (6).

## Claims

1. A coupling device for coupling a first duct to a second duct, the device comprising first and second tubular elements (5, 6) each having a coupling segment (5.1, 6.1) for coupling respectively to the first duct and to the second duct, the coupling segments being linked together by link segments (5.2, 6.2) that are assembled together to be free to turn relative to each other, the link segment (5.2) of the first element (5) comprising a tubular male portion that is elastically deformable in a radial direction and that is engaged by force in a female portion (6.3) of the link segment (6.2) of the second element (6) that is rigid relative thereto, the device being **characterized in that** the coupling device includes a third element (14; 24; 34) that defines a fluid passage and that is received in the male portion to oppose radial deformation thereof.

2. A device according to claim 1, wherein the third element is a split ring (14) received in an internal groove (8) of the male portion (5.1).

3. A device according to claim 1, wherein the third element is a split bushing (14).

4. A device according to claim 1, wherein the third element is a tubular sheath (24).

5. A device according to claim 4, wherein the sheath (24) has an end portion (24.2) secured to the second element (6) and an end portion (24.1) pivotally received in the male portion (5.2).

6. A device according to any one of claims 2 to 5, wherein the coupling segment (6.1) of the second element (6) is externally threaded for engagement into a tapped end of the second duct.

7. A device according to claim 1, wherein the third element (34) comprises a stiffener section (34.1) engaged in the male portion (5.2), an intermediate section (34.2) extending in the coupling segment (6.1) of the second element (6), and an anchor section (34.3) projecting from said coupling segment to be anchored in the second duct.

8. A device according to claim 7, wherein the anchor section (34.3) of the third element (34) is threaded for engagement in a tapped end of the second duct, and the intermediate section (34.2) preferably has an outside surface of non-circular outline.

9. A device according to claim 7, wherein the intermediate section (34.2) and the coupling segment (6.1) of the second element (6) have complementary portions in relief (35, 36; 37, 38) providing elastic retention therefore.

10. A device according to claim 7, wherein the intermediate section (34.2) is welded in the coupling segment (6.1) of the second element (6).

11. A device according to claim 7, wherein the stiffener section (34.3) and the first element (5) include complementary portions in relief (34.4, 40, 41) providing them with mutual elastic retention, and wherein the third element (34) and the first element (5) include shoulders for retaining the second element (6) between them.

## Patentansprüche

1. Vorrichtung zum Verbinden einer ersten Leitung mit einer zweiten Leitung, umfassend ein erstes und ein zweites rohrförmiges Element (5, 6), die jeweils einen Verbindungsabschnitt (5.1, 6.1) zur Verbindung mit der ersten Leitung bzw. der zweiten Leitung haben und die miteinander über Verbindungsabschnitte (5.2, 6.2) verbunden sind, die zueinander frei drehbar gelagert sind, wobei der Verbindungsabschnitt (6.2) des ersten Elements (5) einen rohrförmigen männlichen Abschnitt umfasst, der radial elastisch verformbar ist und mit Kraft in einen relativ starren weiblichen Abschnitt (6.3) des Verbindungsabschnittes (5.2) des zweiten Elements (6) eingedrückt wird, **dadurch gekennzeichnet, dass** die Verbindungsvorrichtung ein drittes Element (14; 24; 34) umfasst, das einen Fluiddurchgang begrenzt und das in dem männlichen Abschnitt aufgenommen ist, um dessen radialer Verformung entgegenzuwirken.

2. Vorrichtung nach Anspruch 1, wobei das dritte Element ein geschlitzter Ring (14) ist, der in einer inneren Nut (8) des männlichen Abschnittes (5.1) aufgenommen ist.

3. Vorrichtung nach Anspruch 1, wobei das dritte Element eine geschlitzte Hülse (14) ist.

4. Vorrichtung nach Anspruch 1, wobei das dritte Element eine rohrförmige Auskleidung (24) ist.

5. Vorrichtung nach Anspruch 4, wobei die Auskleidung (24) einen Endabschnitt (24.2) hat, der fest mit dem zweiten Element (6) verbunden ist, sowie einen Endabschnitt (24.1), der drehbar in dem männlichen Abschnitt (5.2) aufgenommen ist.

6. Vorrichtung nach einem der Ansprüche 2 bis 5, wobei der Verbindungsabschnitt (6.1) des zweiten Elements (6) außen mit einem Gewinde versehen ist, um mit einem mit einem Innengewinde versehenen Ende der zweiten Leitung in Eingriff gebracht zu werden.

7. Vorrichtung nach Anspruch 1, wobei das dritte Element (34) einen mit dem männlichen Abschnitt (5.2) in Eingriff stehenden Versteifungsabschnitt (34.1), einen Zwischenabschnitt (34.2), der sich in dem Verbindungsabschnitt (6.1) des zweiten Elements (6) erstreckt, und einen Verankerungsabschnitt (34.3) umfasst, der aus dem genannten Verbindungsabschnitt vorsteht, um in der zweiten Leitung verankert zu werden.

8. Vorrichtung nach Anspruch 7, wobei der Verankerungsabschnitt (34.3) des dritten Elements (34) mit einem Gewinde versehen ist, um mit einem mit einem Gewinde versehenen Ende der zweiten Leitung in Eingriff gebracht zu werden, und der Zwischenabschnitt (34.2) vorzugweise eine Außenfläche mit nicht kreisförmiger Kontur hat.

9. Vorrichtung nach Anspruch 7, wobei der Zwischenabschnitt (34.2) und der Verbindungsabschnitt (6.1) des zweiten Elements (6) komplementäre Reliefelemente (35, 36; 37, 38) haben, die deren elastischen Halt sicherstellen.

10. Vorrichtung nach Anspruch 7, wobei der Zwischenabschnitt (34.2) in den Verbindungsabschnitt (6.1) des zweiten Elements (6) eingeschweißt ist.

11. Vorrichtung nach Anspruch 7, wobei der Versteifungsabschnitt (34.3) und das erste Element (5) komplementäre Reliefelemente (34.4, 40, 41) umfassen, die deren gegenseitigen elastischen Halt sicherstellen, und wobei das dritte Element (34) und das erste Element (5) Schultern umfassen, um zwischen sich das zweite Element (6) zu halten.
